# EUROPEAN PATENT SPECIFICATION

(11) **EP 1 831 080 B1**
(45) Date of publication and mention of the grant of the patent: **11.11.2009**
(21) Application number: 05816296.7
(22) Date of filing: 20.12.2005
(51) Int. Cl.: B65D 6/18, B62B 3/00

(54) **Collapsible container**
ZUSAMMENFALTBARER BEHÄLTER
CONTENANT PLIABLE

(30) Priority: 20.12.2004 NL 1027821
(43) Date of publication of application: 12.09.2007
(73) Proprietor: Colpac Collapsible Containers B.V., 5656 AE Eindhoven (NL)
(72) Inventor: LEEDEKERKEN, Wouter, Johannes, NL-3353 CZ Papendrecht (NL)
(74) Representative: Langenhuijsen, Bastiaan Wilhelmus Herman
(86) International application number: PCT/NL2005/050087
(87) International publication number: WO 2007/001166

(56) References cited:
- CH-A5- 687 317
- GB-A- 693 235
- NL-C2- 1 015 861
- US-A- 3 920 258

## Description

The invention relates to a container for containing objects, comprising: two opposite side walls, a rear wall connecting the opposite side walls, and a bottom panel which can be connected to the walls. Opposite sides are understood to mean sides which lie opposing each other, such sides also being referred to as facing sides.

For the transport and storage of individual goods and products use is made of larger containers in which a plurality of individual objects can be placed simultaneously. Handling of the products is for instance thus simplified, and the danger of loss of quality of the products (resulting from causes such as damage and contamination) can be reduced. With the transport and storage of individual goods and products it is for instance possible to envisage the transport of (postal) parcels, luggage, parts and so forth. After use the large containers, or holders, used for packing individual goods and products are often stored or transported in empty state before they are reused. Drawbacks of the existing containers are that they are often loaded less than efficiently and, also in non-active state, they have a considerable volume, so that they are also costly in this non-active state. This is because they then also require a considerable storage or transport volume.

The Dutch patent NL 1015861 discloses a portable, collapsible container in accordance with the preamble of appended claim 1, comprising a rectangular base, a lid on the upper side, and a peripheral wall with front wall, rear wall, and two opposite side walls. The front wall and rear wall are formed by stiff panels. The side walls each comprise a rigid panel hingeable around a vertical hinge lid and connected to the front wall. The side walls are provided with three hinges. The base is hingeably connected around a horizontal hinge line with the front wall, so that it is hingeable between a position along the inside of the front wall and a horizontal position in which the base is located near the underside of the peripheral wall on the inside. The lid is connected hingeably around a horizontal hinge line with the rear wall or the front wall.

The Swiss patent CH 687 317 describes a collapsible container comprising two opposite side walls, a rear wall connecting the opposite side walls, a front wall lying opposite the rear wall, and a bottom panel connected hingedly to the side walls. The rear wall is hingedly connected via hinges to both side walls and is provided with three hinges. The front wall is hingedly connected to at least one side wall and, in an embodiment variant, the front wall is embodied as a two-part door. The pivot axes of the panels, front wall and rear wall run parallel to each other and are perpendicular to the bottom panel in the active state of the container. For collapsing purposes the rear wall and the bottom panel can be folded respectively outward and inward (between the side walls). The container is also provided with wheels. In the collapsed state the holders can be stacked "horizontally".

The object of the present invention is to provide a solution for using containers for packing products in more efficient manner in a situation where a container is filled with products as well as in a situation in which a container does not contain any products. The present invention provides for this purpose a container as according to claim 1. This container also makes it possible to vary the volume which the container occupies. In an active state the space occupied is relatively large and the container also has a relatively large containers space such that it provides a large holding capacity. In the collapsed state however, the volume occupied by the container can be reduced very considerably without this resulting in the drawbacks according to the prior art. Because a segment of the rear wall has a stationary connection to one of the side walls, this segment encloses a fixed angle with the relevant side wall; a fixed angle between the side wall and a segment of the rear wall will therefore also be retained in the collapsed state. It is precisely in the stationary angle that a part of the collapsed container can thus be protected from outside influences. In the prior art container both connections between the side walls and the rear wall are hinged and consequently more sensitive/more vulnerable than the stationary construction according to the present invention. The design is such that in collapsed state the construction is a substantially protected whole; the relatively vulnerable components are protected against outside influences, which considerably limits the vulnerability of the container. The container according to the present invention also combines the advantage of taking up little space in the collapsed state with the advantage that it can also occupy a stable vertical position in the collapsed state. This means that even in the collapsed state the container stands in stable manner on the ground such that it does not fall over. The stationary angle between a section of the rear wall and a side wall now results in the collapsed container standing relatively solidly (also depending of course on the specific dimensions of the container), even in a collapsed state. This makes the container according to the invention easier to handle in use (particularly in collapsed state) than the prior art containers. They can thus be stored vertically for instance, and horizontal stacking as according to the prior part, while still being possible, is no longer a necessity. This increase in the options for use evidently provides a considerable advantage. These advantages can of course also be realized using more than three (and preferably an odd number of) hinges in the rear wall of the container.

The British patent GB 693,235 describes a collapsible container consisting of two opposite one-part side panels, two opposite two-part side panels, a bottom panel and a top panel. The bottom panel is provided with hooks which, in the folded-out position, engage on the underside of the side panels. The top and bottom panels are hingedly connected to a one-part side panel, the side panels being hingedly connected to each other. The pivot axes of the side panels run parallel to each other and, in the active state of the container, lie perpendicularly of the bottom panel. The advantages of the present invention cannot be realized with this prior art construction either.

In a preferred variant the hinges are provided with pivot axes running parallel to each other. It is also possible for one of the hinges to form a connection between the rear wall and a side wall. It is also desirable for the pivot axes to lie perpendicularly of the bottom panel in the active state of the container. Using such a construction the container can be folded together into the position (more specifically into a vertical position) in which the container is used to contain products. As soon as the container is emptied, the volume of the container can then be reduced without it being necessary here to change the orientation of the container; it is thus possible to keep the container for instance in a vertical orientation and to move the side walls closer toward each other.

If the bottom panel is hingedly connected to a side wall, the orientation of the bottom panel can be changed. This is advantageous when changing the situation of the container from the active state to the collapsed state such that this bottom panel does not form an obstruction when the side walls are displaced toward each other. In order to now prevent the bottom panel displacing in undesirable manner, the container can be provided with locking means for releasable locking of the bottom panel. This locking is possible in the active state of the container, wherein the bottom panel lies substantially perpendicularly of the walls. Conversely, is also possible to lock the bottom panel in the collapsed state using locking means suitable for this purpose: here the bottom panel is positioned substantially parallel to one of the walls. In the active state of the container the bottom panel can per se form a locking for the purpose of holding the container in the active state.

The side walls can consist at least partially of a material with a cut-away structure, such as for instance a mesh or a net. The advantage of using such a material is that it can take a relatively light form and that it provides a view of the interior of the container. The container can also be provided with wheels. Wheels enable the container to travel (preferably in both the active state and the collapsed state), but they can also simplify collapsing because the side walls can be readily moved toward each other by means of the wheels. It is noted on the other hand that the container can also be embodied with non-mobile support on the bottom, or with a combination of supports. Such a combination of supports consists of at least one mobile support position and at least one non-mobile support position. In order to limit the chance of undesired displacement of the container it is also possible to provide at least one of the wheels with a brake. The support elements can, if desired, also be embodied such that they provide access for engaging means, such as for instance (although not exclusively) the forks of a fork-lift truck.

The container can also be provided with a connecting element which in an active state forms a releasable connection between the side walls on the side remote from the rear wall. Such a connecting element can be pivotally connected to one of the side walls and, in an active state of the container, can also form a door. A door prevents undesired exit of the products from the container space. A further advantage of the connecting element, or a door, is that it increases the strength of the container in the active state.

Is also possible to provide the container with a top panel which in an active position of the container can be placed on the side opposite (facing) the bottom panel and substantially parallel to the bottom panel. Such a top panel can serve to protect the container space. It is also the case that a top panel can increase the strength of the container in an active state.

Finally, it is also advantageous if the container is stackable. This is particularly the case for stacking in the active state, but optionally also for stacking in the collapsed state. The possibilities of optimizing the utilization of a storage or transport area are further increased by means of stacking of the containers.

The present invention will be further elucidated on the basis of the non-limitative exemplary embodiments shown in the following figures. Herein:
figure 1 shows a perspective view of a container according to the present invention in an active state,
figures 2A-D show some schematically represented successive steps during collapsing of the container according to the invention,
figure 3 is a top view of the container as shown in figure 1 in a collapsed state, and
figure 4 is a perspective view of an alternative embodiment variant of the container according to the invention in an active state.

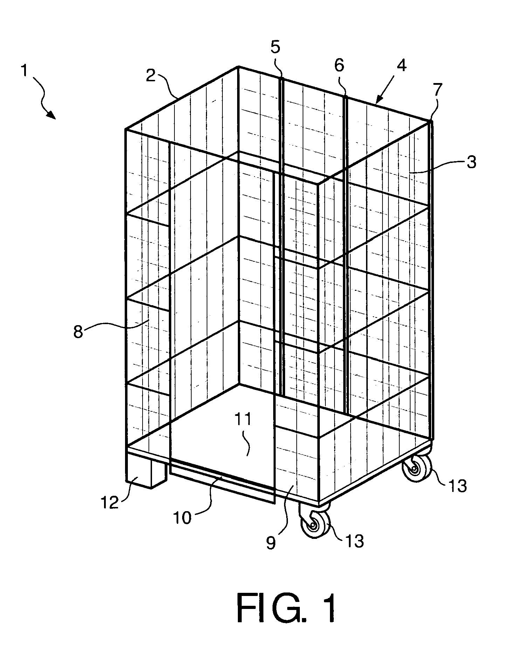

Figure 1 shows a container 1 provided with two opposite and standing side walls 2, 3. Side walls 2, 3 are connected to each other by means of a rear wall 4 which is provided with three upright hinges 5, 6, 7. One hinge 7 herein forms the connection of rear wall 4 to side wall 3. The front side of container 1 is provided with two upright front wall parts 8, 9 which connect to each other with a releasable connecting bar 10. The underside of container 1 is provided with a bottom plate 11 which is held at a distance from the ground by two fixed legs 12 placed at corner points of container 1 and two wheels 13 likewise placed at corner points of container 1. In the shown embodiment variant the walls of container 1 are manufactured from mesh material. Container 1 can be collapsed from the active state shown in this figure to a state in which the space occupied by container 1 is reduced; this will be shown below with reference to a schematically represented container.

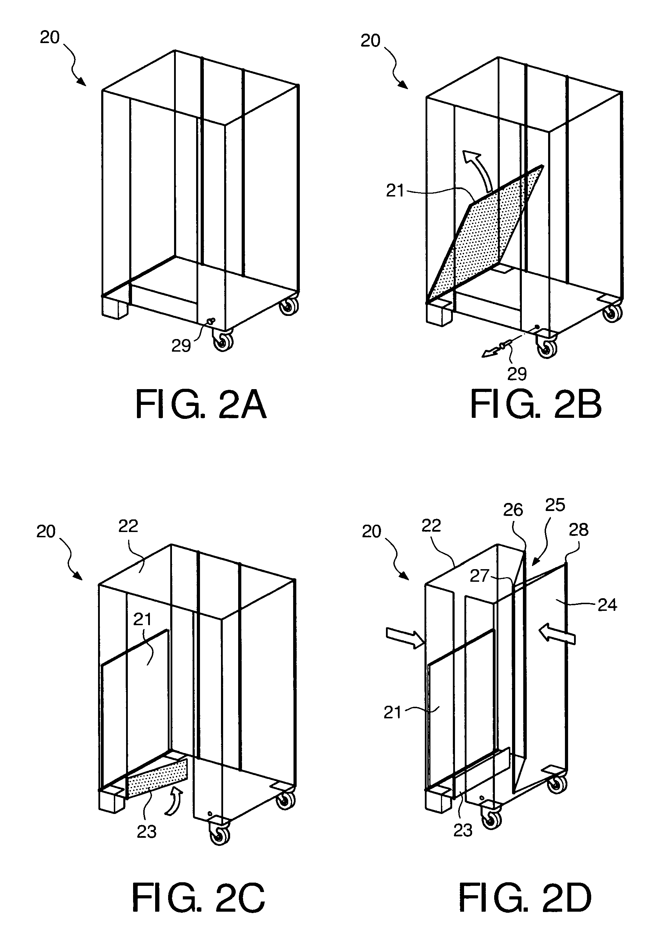

Figure 2A shows a schematically represented container 20 iri an active state in which a bottom plate 21 is held in position by a locking pin 29. In figure 2B bottom plate 21 of the container is folded upward after locking pin 29 has been removed for this purpose. In figure 2C bottom plate 21 is placed wholly against a side wall 22, and here is also shown that a threshold or connecting part 23 is swivelled inward. The space occupied by container 20 can then be reduced by moving opposite side walls 22, 24 toward each other. Clearly shown here is that a rear wall 25 of the container folds up (in concertina form) between side walls 22, 24. This is made possible by the three hinges 26, 27, 28 arranged for this purpose in rear wall 25.

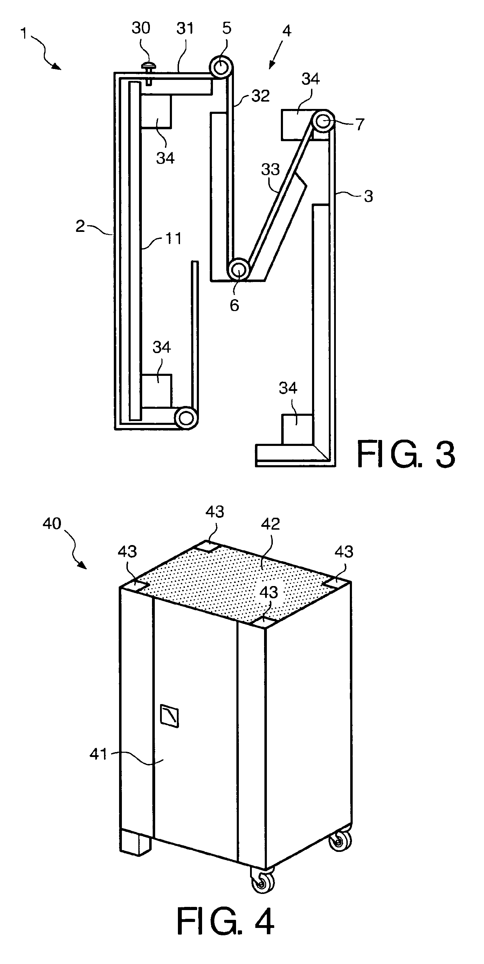

Figure 3 shows container 1 in collapsed state and in top view. Folded against left-hand side wall 2 is bottom plate 11, which in this situation can be locked by a schematically represented locking element 30. Rear wall 4 of container 1 is divided into three segments 31, 32, 33. The first segment 31 is rigidly connected to left-hand side wall 2 and connects via hinge 5 to the second segment 32. On the side remote from hinge 5 the second segment 32 is connected via hinge 6 to the third segment 33, which finally connects to the right-hand side wall 3 via hinge 7. Clearly shown is that segments 31, 32, 33 are moved in concertina-like fashion toward each other when compared to the active state of container 1 as shown in figure 1. Also shown in this figure are support surfaces 34 on which legs 12 and wheels 13 engage. A further component is formed by the bent edges 35 situated on the underside of segments 31, 32, 33, right-hand side wall 3 and front wall parts 8, 9. The bottom plate 11 can support on these bent edges 35 when bottom plate 11 is displaced downward in an active state of the container.
Figure 4 finally shows another embodiment variant of a container 40 whose front side is also provided with a closable door 41. The top side of this container is also covered with a releasable upper panel 42. This upper panel 42 leaves clear four strengthened corner parts 43 on which there can support an object (such as another container) to be optionally placed on container 40.

## Claims

1. Container (1, 20, 40) for containing objects, comprising:
- two opposite side walls (2, 3, 22, 24),
- a rear wall (4, 25) connecting the opposite side walls (2, 3, 22, 24), and
- a bottom panel (11, 21) which can be connected to the walls (2, 3, 4, 22, 24, 25),
wherein the rear wall (4, 25) is provided with at least three hinges (5, 6, 7, 26, 27, 28), whereby the container (1, 20, 40) is adjustable between an active state in which the bottom panel (11, 21), the side walls (2, 3, 22, 24) and the rear wall (4, 25) at least partially enclose a container space, and a collapsed state in which the rear wall (4, 25) is folded together such that the side walls (2, 3, 22, 24) are placed at a shorter distance from each other than in the active state, and wherein a segment (31) of the rear wall (4, 25) has a stationary connection to one of the side walls (2, 22), **characterized in that** one of the hinges (7, 28) forms a connection between the rear wall (4, 25) and a side wall (3, 24).

2. Container (1, 20, 40) as claimed in claim 1, **characterized in that** the hinges (5, 6, 7, 26, 27, 28) are provided with pivot axes running parallel to each other.

3. Container (1, 20, 40) as claimed in any of the foregoing claims, **characterized in that** the pivot axes lie perpendicularly of the bottom panel (11, 21) in the active state of the container (1, 20, 40).

4. Container (1, 20, 40) as claimed in any of the foregoing claims, **characterized in that** the bottom panel (11, 21) is hingedly connected to a side wall (2, 22).

5. Container (1, 20, 40) as claimed in any of the foregoing claims, **characterized in that** the container (1, 20, 40) is provided with locking means (29) for releasable locking of the bottom panel (11, 21) in the active state of the container (1, 20, 40), wherein the bottom panel (11, 21) lies substantially perpendicularly of the walls (2, 3, 4, 22, 24, 25).

6. Container (1, 20, 40) as claimed in any of the foregoing claims, **characterized in that** the container (1, 20, 40) is provided with locking means (30) for releasable locking of the bottom panel (11, 21) in the collapsed state, wherein the bottom panel (11, 21) is placed substantially parallel to one of the walls (2, 3, 4, 22, 24, 25).

7. Container (1, 20, 40) as claimed in any of the foregoing claims, **characterized in that** the side walls (2, 3, 22, 24) are provided with a material with a cut-away structure.

8. Container (1, 20, 40) as claimed in any of the foregoing claims, **characterized in that** the container (1, 20, 40) is provided with wheels (13).

9. Container (1, 20, 40) as claimed in claim 8, **characterized in that** at least one of the wheels (13) is provided with a brake.

10. Container (1, 20, 40) as claimed in any of the foregoing claims, **characterized in that** the container (1, 20, 40) is provided with a connecting element (10) which in an active state forms a releasable connection between the side walls (2, 3, 22, 24) on the side remote from the rear wall (4, 25).

11. Container (1, 20, 40) as claimed in claim 10, **characterized in that** the connecting element (10) is pivotally connected to one of the side walls (2, 3, 22, 24).

12. Container (1, 20, 40) as claimed in any of the foregoing claims, **characterized in that** in an active state of the container (1, 20, 40) the connecting element (10) forms a door (41).

13. Container (1, 20, 40) as claimed in any of the foregoing claims, **characterized in that** the container (1, 20, 40) is also provided with a top panel (42) which in an active position of the container (1, 20, 40) can be placed on the side opposite the bottom panel (11,21) and substantially parallel to the bottom panel (11, 21).

14. Container (1, 20, 40) as claimed in any of the foregoing claims, **characterized in that** the container (1, 20, 40) is stackable.

## Patentansprüche

1. Behälter (1, 20, 40) für die Aufnahme von Gegenständen, der umfasst:
- zwei gegenüberliegende Seitenwände (2, 3, 22, 24),
- eine Rückwand (4, 25), die die gegenüberliegenden Seitenwände (2, 3, 22, 24) verbindet, und
- eine Bodenplatte (11, 21), die mit den Wänden (2, 3, 4, 22, 24, 25) verbunden werden kann, worin die Rückwand (4, 25) mit mindestens drei Scharnieren (5, 6, 7, 26, 27, 28) versehen ist, wobei der Behälter (1, 20, 40) verstellt werden kann zwischen einem Betriebszustand, in dem die Bodenplatte (11, 21), die Seitenwände (2, 3, 22, 24) und die Rückwand (4, 25) zumindest teilweise einen Behälterraum einschließen, und einem zusammengelegten Zustand, in dem die Rückwand (4, 25) so zusammengefaltet ist, dass die Seitenwände (2, 3, 22, 24) in einem geringeren Abstand zueinander liegen als im Betriebszustand, und worin ein Segment (31) der Rückwand (4, 25) eine feste Verbindung mit einer der Seitenwände (2, 22) hat, **dadurch gekennzeichnet, dass** eines der Scharniere (7, 28) eine Verbindung zwischen der Rückwand (4, 25) und einer Seitenwand (3, 24) bildet.

2. Behälter (1, 20, 40) nach Anspruch 1, **dadurch gekennzeichnet, dass** die Scharniere (5, 6, 7, 26, 27, 28) mit Drehachsen versehen sind, die parallel zueinander verlaufen.

3. Behälter (1, 20, 40) nach einem der vorhergehenden Ansprüche, **dadurch gekennzeichnet, dass** die Drehachsen im Betriebszustand des Behälters (1, 20, 40) senkrecht zu der Bodenplatte (11, 21) liegen.

4. Behälter (1, 20, 40) nach einem der vorhergehenden Ansprüche, **dadurch gekennzeichnet, dass** die Bodenplatte (11, 21) mit einer Seitenwand (2, 22) um ein Scharnier drehbar verbunden ist.

5. Behälter (1, 20, 40) nach einem der vorhergehenden Ansprüche, **dadurch gekennzeichnet, dass** der Behälter (1, 20, 40) mit Sperren (29) für die lösbare Verriegelung der Bodenplatte (11, 21) im Betriebszustand des Behälters (1, 20, 40) versehen ist, worin die Bodenplatte (11, 21) im Wesentlichen senkrecht zu den Wänden (2, 3, 4, 22, 24, 25) liegt.

6. Behälter (1, 20, 40) nach einem der vorhergehenden Ansprüche, **dadurch gekennzeichnet, dass** der Behälter (1, 20, 40) mit Sperren (30) für die lösbare Verriegelung der Bodenplatte (11, 21) im zusammengelegten Zustand des Behälters (1, 20, 40) versehen ist, worin die Bodenplatte (11, 21) im Wesentlichen parallel zu einer der Wände (2, 3, 4, 22, 24, 25) liegt.

7. Behälter (1, 20, 40) nach einem der vorhergehenden Ansprüche, **dadurch gekennzeichnet, dass** die Seitenwände (2, 3, 22, 24) mit einem Material mit unterbrochener Struktur versehen sind.

8. Behälter (1, 20, 40) nach einem der vorhergehenden Ansprüche, **dadurch gekennzeichnet, dass** der Behälter (1, 20, 40) mit Rädern (13) versehen ist.

9. Behälter (1, 20, 40) nach Anspruch 8, **dadurch gekennzeichnet, dass** zumindest eines der Räder (13) mit einer Bremse versehen ist.

10. Behälter (1, 20, 40) nach einem der vorhergehenden Ansprüche, **dadurch gekennzeichnet, dass** der Behälter (1, 20, 40) mit einem Verbindungselement (10) versehen ist, das im Betriebszustand eine lösbare Verbindung zwischen den Seitenwänden (2, 3, 22, 24) auf der von der Rückwand (4, 25) abgelegenen Seite bildet.

11. Behälter (1, 20, 40) nach Anspruch 10, **dadurch gekennzeichnet, dass** das Verbindungselement (10) mit einer der Seitenwände (2, 3, 22, 24) schwenkbar verbunden ist.

12. Behälter (1, 20, 40) nach einem der vorhergehenden Ansprüche, **dadurch gekennzeichnet, dass** das Verbindungselement (10) im Betriebszustand des Behälters (1, 20, 40) eine Tür (41) bildet.

13. Behälter (1, 20, 40) nach einem der vorhergehenden Ansprüche, **dadurch gekennzeichnet, dass** der Behälter (1, 20, 40) auch mit einer oberen Platte (42) versehen ist, die im Betriebszustand des Behälters (1, 20, 40) auf der der Bodenplatte (11, 21) gegenüberliegenden Seite und im Wesentlichen parallel zur Bodenplatte (11, 21) angebracht wird.

14. Behälter (1, 20, 40) nach einem der vorhergehenden Ansprüche, **dadurch gekennzeichnet, dass** der Behälter (1, 20, 40) stapelfähig ist.

## Revendications

1. Conteneur (1, 20, 40) pour contenir des objets, comprenant :
- deux parois latérales opposées (2, 3, 22, 24) ;
- une paroi arrière (4, 25) reliant les parois latérales opposées (2, 3, 22, 24), et
- un panneau inférieur (11, 21) qui peut être relié aux parois (2, 3, 4, 22, 24, 25), étant entendu que la paroi arrière (4, 25) est pourvue d'au moins trois charnières (5, 6, 7, 26, 27, 28) de telle sorte que le conteneur (1, 20, 40) soit réglable entre un état actif dans lequel le panneau inférieur (11, 21), les parois latérales (2, 3, 22, 24) et la paroi arrière (4, 25) entourent au moins partiellement un espace de conteneur, et un état affaissé dans lequel la paroi arrière (4, 25) est repliée de telle sorte que les parois latérales (2, 3, 22, 24) soient placées à une distance plus courte l'une de l'autre que dans l'état actif, et étant entendu qu'un segment (31) de la paroi arrière (4, 25) comporte une liaison fixe à l'une des parois latérales (2, 22), **caractérisé en ce que** l'une des charnières (7, 28) forme une liaison entre la paroi arrière (4, 25) et une paroi latérale (3, 24).

2. Conteneur (1, 20, 40) selon la revendication 1, **caractérisé en ce que** les charnières (5, 6, 7, 26, 27, 28) sont pourvues d'axes de pivotement courant parallèlement les uns aux autres.

3. Conteneur (1, 20, 40) selon l'une quelconque des revendications précédentes, **caractérisé en ce que** les axes de pivotement sont perpendiculaires au panneau inférieur (11, 21) dans l'état actif du conteneur (1, 20, 40).

4. Conteneur (1, 20, 40) selon l'une quelconque des revendications précédentes, **caractérisé en ce que** le panneau inférieur (11, 21) est relié à charnières à une paroi latérale (2, 22).

5. Conteneur (1, 20, 40) selon l'une quelconque des revendications précédentes, **caractérisé en ce que** le conteneur (1, 20, 40) est pourvu d'un moyen de verrouillage (30) pour le verrouillage déblocable du panneau inférieur (11, 21) dans l'état actif du conteneur (1, 20, 40), le panneau inférieur (11, 21) étant sensiblement perpendiculaire aux parois (2, 3, 4, 22,24,25).

6. Conteneur (1, 20, 40) selon l'une quelconque des revendications précédentes, **caractérisé en ce que** le conteneur (1, 20, 40) est pourvu d'un moyen de verrouillage (30) pour le verrouillage déblocable du panneau inférieur (11, 21) dans l'état affaissé, le panneau inférieur (11, 21) étant placé de manière sensiblement parallèle à l'une des parois (2, 3, 4, 22, 24, 25).

7. Conteneur (1, 20, 40) selon l'une quelconque des revendications précédentes, **caractérisé en ce que** les parois latérales (2, 3, 22, 24) sont pourvues d'un matériau à structure ajourée.

8. Conteneur (1, 20, 40) selon l'une quelconque des revendications précédentes, **caractérisé en ce que** le conteneur (1, 20, 40) est pourvu de roues (13).

9. Conteneur (1, 20, 40) selon la revendication 8, **caractérisé en ce que** au moins l'une des roues (13) est pourvue d'un frein.

10. Conteneur (1, 20, 40) selon l'une quelconque des revendications précédentes, **caractérisé en ce que** le conteneur (1, 20, 40) est pourvu d'un élément de liaison (10) qui, dans un état actif, forme une liaison déblocable entre les parois latérales (2, 3, 22, 24) sur le côté distant de la paroi arrière (4, 25).

11. Conteneur (1, 20, 40) selon la revendication 10, **caractérisé en ce que** l'élément de liaison (10) est relié à pivotement à l'une des parois latérales (2, 3, 22, 24).

12. Conteneur (1, 20, 40) selon l'une quelconque des revendications précédentes, **caractérisé en ce que**, dans un état actif du conteneur (1, 20, 40), l'élément de liaison (10) forme une porte (41).

13. Conteneur (1, 20, 40) selon l'une quelconque des revendications précédentes, **caractérisé en ce que** le conteneur (1, 20, 40) est aussi pourvu d'un panneau supérieur (42) qui, dans une position active du conteneur (1, 20, 40), peut être placé du côté opposé au panneau inférieur (11, 21) et d'une manière sensiblement parallèle au panneau inférieur (11, 21).

14. Conteneur (1, 20, 40) selon l'une quelconque des revendications précédentes, **caractérisé en ce que** le conteneur (1, 20, 40) est gerbable.
